# EUROPEAN PATENT APPLICATION

(11) **EP 1 304 853 A2**
(43) Date of publication of application: **23.04.2003**
(21) Application number: 02257142.6
(22) Date of filing: 15.10.2002
(51) Int. Cl.: H04M 1/247, H04N 1/00

(54) **Method and hand-held device for obtaining an image of an object by combining a plurality of images**

(30) Priority: 18.10.2001 US 982372
(71) Applicant: Nokia Corporation, 02150 Espoo (FI)
(72) Inventor: Dutta, Amit, Kawasaki,Kanagawa (JP)
(74) Representative: Higgin, Paul

(57) **Abstract**

A method and hand-held device for scanning an object and creating a complete image of the object, even under low light conditions. The hand-held device contains a camera module and a motion sensor assembly. The hand-held device is moved so that the camera module takes a plurality of images of an object. A motion sensor assembly in the hand-held device detects motion of the hand-held device and movement information from the motion sensor assembly is used to modify each of the plurality of images to remove distortions therein caused by movement of the camera module. The plurality of images are combined to generate a reconstructed image of the object. For taking images under low light conditions, each of the plurality of images are added together to generate a brightened image.

## Description

### BACKGROUND OF THE INVENTION

### Field of the Invention

The present invention relates to image processing and, in particular, is directed to a method and hand-held device for scanning an image and/or taking a picture under low light conditions.

### Description of the Related Art

Hand-held devices such as mobile or hand-held terminals provide enormous flexibility over traditional wired telephone handsets. These hand-held devices enable the communication of data, voice and/or video at locations other than a residence, office or payphone. To enhance such communication of information, many hand-held devices have included special components and features. Hand-held devices have been used for many years to scan three dimensional object to obtain images, such as bar-codes. A problem associated with such hand-held devices is that, in order to keep the weight, bulk and power consumption requirements of the hand-held device to a minimum, the scanner must be used so that scanning of the object is always performed in a uniform fashion and at a consistent distance from the object to be scanned. As a result, scanning is accomplished using movement of mechanical roller or an optical beam from a light "pen" across the surface of the device. Although it would be desirable to use a micro camera to perform such functions by taking a plurality of images of the object and extracting the required information from the plurality of images, unless the camera is consistently at the same distance from the object and unless the camera has not changed its orientation with respect to the object, combining the plurality of images is substantially impossible without some kind of user interaction. This difficulty arises because, if the camera is tilted between the plurality of images, it is difficult to ascertain where or if two successive images line up or overlap. In addition, if the range of the camera from the object changes between successive images, the images of the object will not be uniform in size.

Another problem associated with image processing occurs when there is insufficient ambient light to take an acceptable quality image of an object. Under these less than optimal lighting conditions, individual images taken by a conventional camera are not sufficiently bright, and are blurred because to obtain an image the shutter speed of a conventional camera would have to be reduced to allow sufficient light to enter the camera to generate an image. However, any movement of the camera module, caused, for example, by the shaking or movement of a user's hand, will result in a blurred image. Increasing the shutter speed will reduce the effect of movement of the camera, but will result in images that are too dark. Enhancing the digital contrast and/or brightness may decrease the darkness of the image, however, such enhancement will also enhance the noise in the image, thereby reducing the quality of the image. A simple combination of multiple dark images from a conventional camera will not result in a brighter final image because, due to movement of the camera between the taking of images, the images will not line up correctly with one another.

### SUMMARY OF THE INVENTION

The present invention is directed to a method and hand-held device for scanning an object and creating a complete image of the object, even under low light conditions. The hand-held device contains a camera module and a motion sensor assembly. The hand-held device is moved so that the camera module takes a plurality of images of an object. A motion sensor assembly in the hand-held device detects motion of the hand-held device and movement information from the motion sensor assembly is used to modify each of the plurality of images to removed distortions therein caused by movement of the camera module. The plurality of images from the scanning motion are then combined to generate a reconstructed image of the object. For taking images under low light conditions, each of the plurality of images are added together to generate a brightened image. In each case, the final image may then be viewed locally or remotely or further processed.

Other objects and features of the present invention will become apparent from the following detailed description considered in conjunction with the accompanying drawings. It is to be understood, however, that the drawings are intended solely for purposes of illustration and not as a definition of the limits of the invention, for which reference should be made to the appended claims.

### BRIEF DESCRIPTION OF THE DRAWINGS

In the drawings, wherein like reference numerals delineate similar elements throughout the several views:
FIG. 1 depicts a front view of a hand-held device;
FIG. 2 depicts a side view of the hand-held device of FIG. 1 showing an exemplary placement of a micro camera module:
FIG. 3 depicts a block diagram of one embodiment of the hand-held device of the present invention;
FIG. 4 depicts a flow chart of a method for obtaining images of an object in accordance with the present invention;
FIG. 5 depicts a process diagram of one embodiment of the present invention; and
FIG. 6 depicts a process diagram of a second embodiment of the present invention.

### DETAILED DESCRIPTION OF THE PRESENTLY PREFERRED EMBODIMENTS

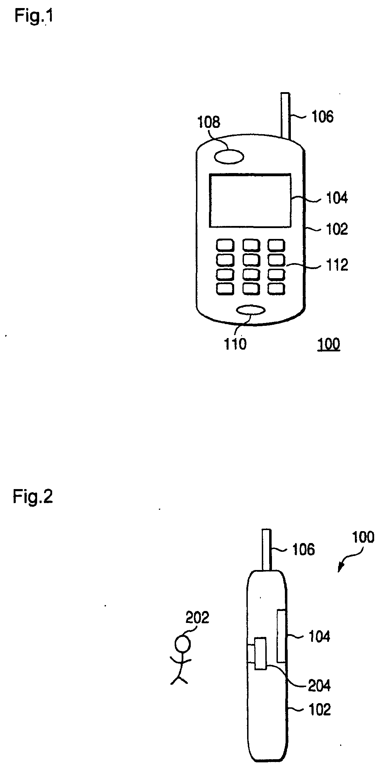

FIG. 1 depicts a front view of a hand-held device 100, in this example, a mobile phone. The hand-held device 100 is configured to transmit information in the form of text, voice, images, audio, video and the like. The particular hand-held device 100 shown has an outer case 102, a display 104, an antenna 106, a speaker 108, a microphone 110, and a keyboard 112. The display 104 is configured to display any form of textual, image and video information. The antenna 106 enables the transmission and reception of information to and from the hand-held device 100. The speaker 108 transmits audio in the form of an audible signal to a user of the hand-held device 100. The microphone 110 receives audio from the user of the hand-held device 100. The keyboard 112 comprises one or more buttons or switches to facilitate the operation of the hand-held device 100. For example, the keyboard 112 comprises buttons to power on and off the hand-held device 100, to activate specific features of the hand-held device 100, and to dial telephone numbers.

FIG. 2 depicts a side view of the hand-held device 100 of an embodiment of the present invention having a micro camera module 204. The micro camera module 204 is configured to focus onto and capture an image of an object 202. Although the micro camera module 204 and the display are shown as being disposed on opposite sides of the hand-held device 100, depending upon the particular use, these components may be on the same side of the device, or on adjacent sides thereof.

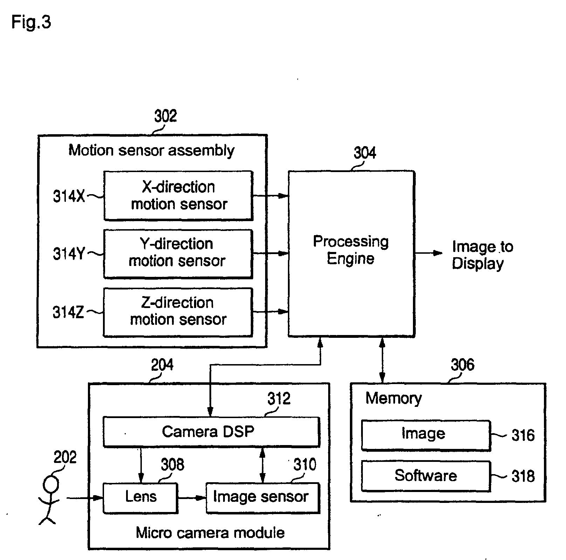

FIG. 3 depicts a block diagram of the hand-held device 100 of one embodiment of the present invention in which the hand-held device comprises a micro camera module 204, a motion sensor assembly 302, a processing engine 304, and a memory 306. The micro camera module 204 has components that comprise a miniature electronic camera, including, for example, an optical lens assembly 308, an image sensor 310, and a camera digital signal processor (DSP) 312. The lens assembly 308 focuses on an object under consideration for further processing. The lens assembly 308 may be in a set position so that only objects within a known range are in focus, or its position may be adjustable by an autofocus or manual focus mechanism which moves the lens to focus on an object within view at any range. Although the device of the present invention is shown and described as using a micro camera module, the particular size of the camera module is solely dependent upon the particular use of the device; therefore, a camera module of any desirable size may be employed.

The image sensor 310 defines or captures a focused image of an object 202 transmitted from the lens assembly 308 and generates an appropriate electrical signal corresponding to the captured image. Examples of the image sensor 310 include, but are not limited to a CCD (charge-coupled device) and a CMOS-based IC (integrated circuit). The camera DSP 312, often referred to as a c-DSP or a custom-DSP, generates an electronic signal in response signal from the image sensor 310 and transmits this signal through the processing engine 304, and after appropriate processing in the processing engine 304, to the display 104 which displays a visible image of the object. Additionally, the camera DSP 312 may control an autofocusing mode of the lens assembly 308 and/or control the shutter speed of the lens assembly 308.

The lens of the lens assembly 308 typically will have a very short focal length of approximately 2 to 4 mm and a diameter of approximately 1 to 3 mm. The image sensor 310 will typically be approximately 4 x 4 mm in size. These sizes are merely illustrative as different sizes of these elements are possible depending upon the overall size of the hand held device and the desired quality of the image to be displayed.

The motion sensor assembly 302 senses movement of the hand-held device 100. The motion sensor assembly 302 comprises one or more motion sensors that preferably sense movement of the hand-held device 100 in at least two, and preferably three, substantially perpendicular directions. Any type of motion sensor may be used, such as MEMS (micro-electro mechanical systems) sensors, electronic motion sensors, and the like. In general, there are two types of motion sensors, accelerometers which detect and measure linear acceleration, and gyroscopes, which detect and measure angular rotation. The particular type of motion sensor most suitable will typically depend upon the particular use of the hand-held device of the present invention. In one preferred embodiment, the motion sensor assembly 302 is a three-axis linear motion sensor comprising a X-direction motion sensor 314X, a Y-axis motion sensor 314Y, and a Z-axis motion sensor 314Z. The motion sensor assembly 302 is therefore able to measure motion of the hand-held device 100 in three dimensions.

The processing engine 304 coordinates the actions of the micro camera module 204, access to the memory 306, and processes the images obtained in accordance with measurements taken by the motion sensors 314X, 314Y, 314Z for ultimate display by the display (which may be integral to the hand-held device or remote therefrom), for storage in a local or remote database, or for transmittal elsewhere, all of which are discussed in more detail below. A suitable processing engine would include some kind of central processing unit capable of processing data and software programs.

The memory 306 stores images 316 captured by the camera module 204 and/or calibration images, and contains appropriate software 318 required for the operation of the various components of the device and for processing the images in response to the measurements obtained by the motion sensor assembly 302. The images 316 comprise images generated from the camera DSP 312 and used to generate a scanned or brightened image.

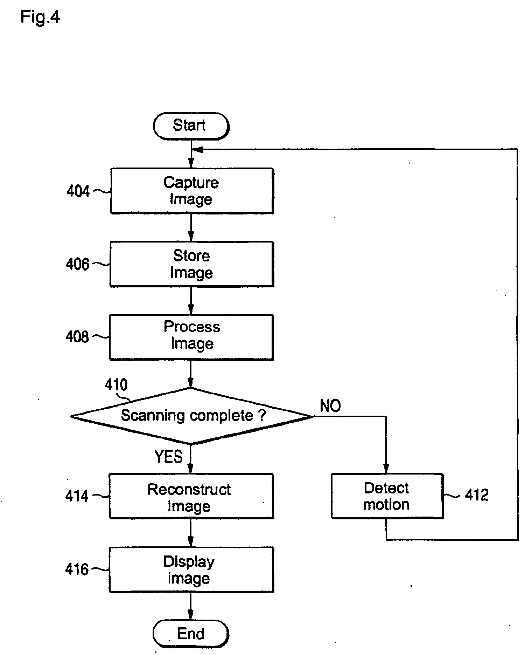

FIG. 4 shows the basic process steps of a first embodiment of the present invention. Initially, after the device has been activated, an image of an object is obtained by focusing the lens and capturing an image with the image sensor, step 404. The scanned image of the object is stored in memory for further processing and/or display, step 406. The stored image is then processed in accordance with instructions received from the processing engine. If this is the first obtained image, there may be no processing. If the image is a second or subsequent image, the image is processed, step 408, in accordance with information gathered by the device including detected motion and/or brightness of the obtained image. For example, the detected motion of the hand-held device is used to correct the position, orientation and size of the image. Additionally, the brightness of the image may be corrected by comparison of the obtained image to a predefined or stored desired brightness standard. It is then determined whether the processing of the object is complete, step 410. Such a determination may be made automatically, such as by taking another image and determining whether the image contains any objects, or manually, such as ascertaining whether the user has entered an instruction with the keyboard that no new images are to be taken. If additional images are to be taken, motion of the hand-held device is measured, step 412, and this information is transmitted to the processing engine for subsequent image processing. An additional image is then obtained, step 404, and the process continues until all image acquisition is done. If no more images are to be acquired, an entire image of the object is reconstructed based upon the previously acquired and processed images, step 414. The reconstructed image is then displayed on the display of the hand-held device, transmitted to a separate display connected to the hand-held device (either through a local wire connection to a local display or through a connection through a network or through the internet to a remote display), or transmitted wirelessly to a local or remote display device or storage medium. Alternatively, or in addition, the reconstructed image may be stored locally or remotely as an image or converted from an image into text, etc., by an optical character recognition (OCR) program. The text may then be added to an appropriate local or remote database, such as a list of telephone numbers, internet addresses (URLs), e-mail addresses, names, etc., which can later be accessed by the hand-held device or another device to initiate a telephone call, browse the Internet, send an e-mail message, etc.

Although the various steps are described as occurring one after the other, alternatively, and preferably, many of the steps can be performed simultaneously in parallel with respect to capturing and/or processing successive images of the object.

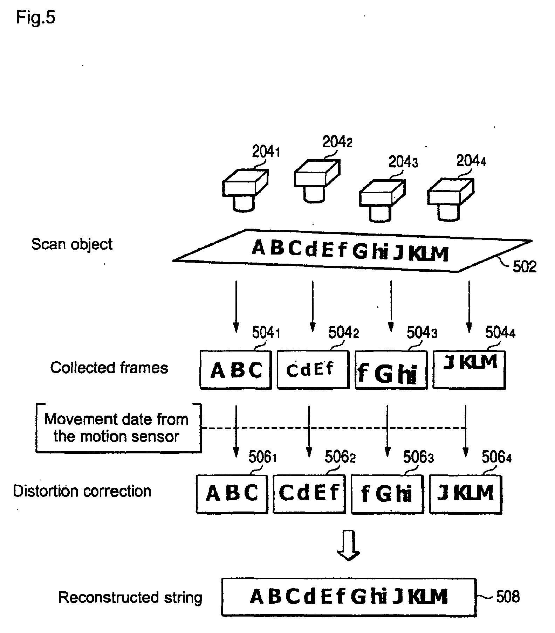

Referring now to the example of one embodiment of the present invention shown in FIG. 5, the object 202 comprises a line of alphabet letters 502. Of course, the object 202 may alternatively comprise a three-dimensional object, such as a person, a box, a piece of machinery on a conveyor belt, etc., or other type of information presented on a two-dimensional substantially planar surface, such as numbers, words, text, a drawing, a bar code, etc.

The object 502 is scanned with a micro camera module 204 by gradually moving the hand-held device 100 across a substantially stationary object 502. In this example, the hand-held device, with its micro camera module 204, is moved from left to right above the object 502 from position 204₁, to position 204₂, to position 204₃, to position 204₄. As the hand-held device 100 is moved over the object 502, the micro camera module 204 in the hand-held device 100 takes a plurality of pictures of the object 502 and generates an image for each. In this example, four images 504₁, 504₂, 504₃, 504₄ are generated for the four micro camera positions 204₁, 204₂, 204₃, 204₄, respectively.

In this example, a number of the generated images 504 have a overlapping regions with respect to a preceding or succeeding image: the letter "C" appears in the first and second generated images 504₁, 504₂; and the letter "f" appears in the second and third images 504₂, 504₃. Also, in the four images 504₁, 504₂, 504₃, 504₄, the alignment of the letters is not the same in the four images. Finally, the size of the letters in each of the four images is not the same because the micro camera 204 was not consistently at the same range from the object 502. Movement data from the motion sensor assembly 302 is then used to correct the distortions in the collected image frames to obtain distortion corrected images 506₁, 506₂, 506₃ and 506₄. For this embodiment, it is preferred to use a motion sensor of the accelerometer type which detects and measures linear acceleration because the hand-held device is moved substantially along a line. The entire image 508 of the object is then reconstructed by assembling the images and removing any overlapping portions. The reconstructed image may be displayed, stored, or transmitted, as discussed above.

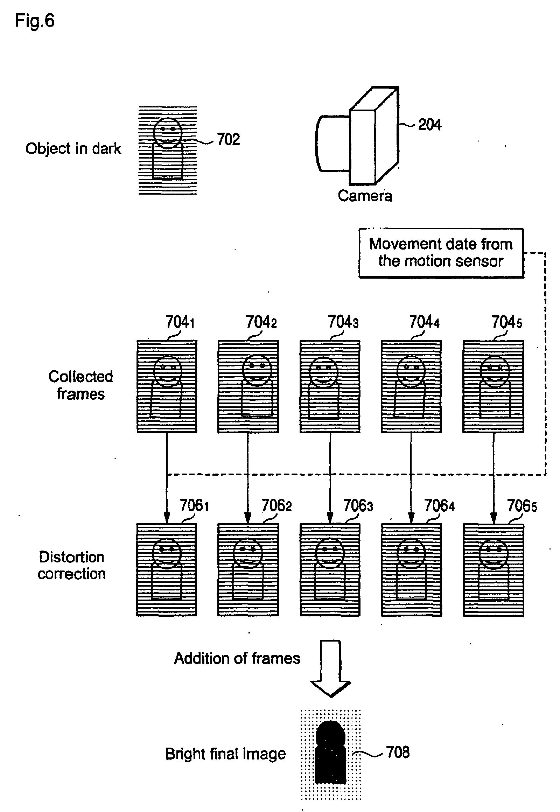

Referring now to the example of a second embodiment of the present invention shown in FIG. 6, the object 202 comprises a three-dimensional object, in this case a person. For this embodiment, it is assumed that the object is not subject to the optimal lighting conditions so that individual images taken by a conventional camera would not be sufficiently bright, and would be blurred. These undesirable effects are caused because under these less than optimal lighting conditions, to obtain an image the shutter speed of a conventional camera would have to be reduced to allow sufficient light to enter the camera to generate an image; however, under these conditions, any movement of the camera module, caused, for example, by the shaking or movement of a user's hand, will result in a blurred image. Increasing the shutter speed will reduce the effect of movement of the camera, but will result in images that are too dark. Enhancing the digital contrast and/or brightness may decrease the darkness of the image, however, such enhancement will also enhance the noise in the image, thereby reducing the quality of the image. A simple combination of multiple dark images from a conventional camera will not result in a brighter final image because, due to movement of the camera between the taking of images, the images will not line up correctly with one another. In accordance with the present invention, to overcome these deficiencies, a number of substantially identical images of the object are taken at a fast shutter speed, and then these images are combined. Movement of the camera module between the taking of images is measured and the images are appropriately corrected to ensure that each of the images are aligned properly with one another before they are combined. The multiple dark images, after alignment correction are then combined to produce a bright, clear image in which the signal to noise ratio is improved, thus resulting in a final picture with high quality. In accordance with the invention, the camera module 204 of the hand-held device 308 focuses on the object 702 and takes a plurality of images, 704₂, 704₃, 704₄ and 704₅, each of which are stored in memory. Each of these images are processed to correct for motion of the hand-held device that is detected by the motion sensors to generated an equal number of distortion corrected images, 704₁, 704₂, 704₃, 704₄ and 704₅. For this embodiment, it is preferred to use a motion sensor of the gyroscope type which detects and measures rotation because image destabilization is typically caused by movement of a hand holding the hand-held device which movement is substantially rotational. The distortion correction corrects the images to place the object at the center of the frame of each image, in the same orientation, and with a uniform size. These distortion corrected images, 704₁, 704₂, 704₃, 704₄ and 704₅, are then combined to form a bright final image 708. The processing engine may be programmed so that a predetermined number of images are repeatedly taken, or so that a sufficient number of images are taken to result in a reconstructed image that is above a predetermined brightness threshold.

Although processing of the images has been described as occurring exclusively within the hand-held device, alternatively processing of the images may be performed by a data processor located external to the hand-held device, thereby reducing the size, weight, power demands, etc. of the hand-held device. In this embodiment, the plurality of images that are taken by the hand-held device are transmitted, either in a hard-wired connection or wirelessly, to a separate processor, which may be close by or distantly remote from the hand-held device, such as in a network server. Also transmitted to the separate processor is the movement information detected by the motion sensors of the hand-held device. The separate processor then uses the movement information to process the plurality of images to correct their relative distortions and then combines the images into the reconstructed image. This reconstructed image is then transmitted back to the hand-held device for display on its display, and/or transmitted or stored elsewhere for display by another display.

The hand-held device may be a mobile phone, a personal digital assistant, or any device has other uses, or a dedicated hand-held device which has no function other than to capture images of objects.

Thus, while there have been shown and described and pointed out fundamental novel features of the present invention as applied to a preferred embodiment thereof, it will be understood that various omissions and substitutions and changes in the form and details of the devices described and illustrated, and in their operation, and of the methods described may be made by those skilled in the art without departing from the spirit of the present invention. For example, it is expressly intended that all combinations of those elements and/or method steps which perform substantially the same function in substantially the same way to achieve the same results are within the scope of the invention. Substitutions of elements from one described embodiment to another are also fully intended and contemplated. It is also to be understood that the drawings are not necessarily drawn to scale but that they are merely conceptual in nature. It is the intention, therefore, to be limited only as indicated by the scope of the claims appended hereto.

## Claims

1. A hand-held device for taking an image of an object comprising:
a camera module capable of focusing on and generating an electronic image signal corresponding to an image of the object;
a motion sensor for sensing movement of said camera module and for generating a movement signal indicative of the movement of said camera module; and
a transmitting means for transmitting the electronic image signal and the movement signal to a processing engine.

2. A hand-held device as claimed in claim 1, further comprising a processing engine receiving the electronic image signal and the movement signal from the transmitting means, and for processing the electronic image signal in response to the movement signal to correct the image signal for movement of said camera module, and for combining a plurality of corrected image signals into an electronic image output signal corresponding to a single image of the object.

3. A hand-held device as claimed in claim 1 or claim 2, wherein said motion sensor is capable of detecting movement of said camera module in at least two dimensions.

4. A hand-held device as claimed in any one of the preceding claims, wherein said motion sensor is capable of detecting movement of said camera module in three dimensions.

5. A hand-held device as claimed in any one of the preceding claims, wherein said motion sensor comprises a accelerometer.

6. A hand-held device as claimed in any one of the preceding claims, wherein said motion sensor comprises a gyroscope.

7. A hand-held device as claimed in any one of the preceding claims, wherein said motion sensor is capable of detecting movement of said camera module in three dimensions.

8. A hand-held device as claimed in any one of the preceding claims, further comprising a memory for storing a plurality of electronic image signals corresponding to a plurality of images of the object.

9. A hand-held device as claimed in claim 2, wherein said processing engine is capable of combining a plurality of corrected image signals corresponding to a plurality of images taken of different portions of the object.

10. A hand-held device as claimed in claim 2, wherein said processing engine is capable of combining a plurality of corrected image signals corresponding to a plurality of images taken of the object to result in a signal capable of producing an image of a higher quality than any of the single images.

11. A hand-held device as claimed in claim 1 in combination with a processing engine located remotely from the hand-held device, said processing engine receiving the electronic image signal and the movement signal from the transmitting means, and for processing the electronic image signal in response to the movement signal to correct the image signal for movement of said camera module, and for combining a plurality of corrected image signals into an electronic image output signal corresponding to a single image of the object.

12. A hand-held device as claimed in any one of the preceding claims, wherein said hand-held device is a mobile phone.

13. A method for obtaining an image of an object with a hand-held device containing a camera module and a motion sensor, said method comprising:
taking a plurality of images of the object with the camera module to generate an electronic image signal corresponding to each of the plurality of images taken;
storing the plurality of electronic image signals;
sensing movement of the camera module between the taking with the camera module of the plurality of images of the object;
generating a plurality of movement signals which are indicative of sensed movement of the camera module;
processing each of the plurality of electronic image signals in response to the movement signals to correct for movement of the camera module to generate a plurality of corrected electronic image signals; and
combining the plurality of corrected electronic image signals into an electronic output signal corresponding to a single image of the object.

14. A method as claimed in claim 13, wherein movement of the camera module in at least two dimensions is sensed.

15. A method as claimed in claim 13 or claim 14, wherein movement of the camera module in three dimensions is sensed.

16. A method as claimed in claim 13, wherein storing the plurality of electronic image signals, processing each of the plurality of electronic image signals, and combining the plurality of corrected electronic image signals is performed by the hand-held device.

17. A method as claimed in any one of claims 13 to 16, wherein the hand-held device is a mobile phone.

18. A method as claimed in claim 13, wherein storing the plurality of electronic image signals, processing each of the plurality of electronic image signals, and combining the plurality of corrected electronic image signals is performed by a processor remote from the hand-held device.

19. A method as claimed in claim 13, wherein in said combining step, a plurality of corrected image signals corresponding to a plurality of images taken of different portions of the object are combined.

20. A method as claimed in claim 13, wherein in said combining step, a plurality of corrected image signals corresponding to a plurality of images taken of the object are combined to result in a signal capable of producing an image of a higher quality than any of the single images.

21. A method as claimed in any one of claims 13 to 20, further comprising displaying on a display of the hand-held device an image in response to the electronic image output signal.

22. A method as claimed in any one of claims 13 to 21, further comprising transmitting the electronic image output signal to a display remote from the hand-held device and displaying on the display an image in response to the electronic image output signal.
